(19) Europäisches Patentamt

European Patent Office

Office européen des brevets

(11) Veröffentlichungsnummer: **0 249 853 B1**

## (12) EUROPÄISCHE PATENTSCHRIFT

(45) Veröffentlichungstag der Patentschrift: **18.03.92**

(21) Anmeldenummer: **87108299.6**

(22) Anmeldetag: **09.06.87**

Die Akte enthält technische Angaben, die nach
dem Eingang der Anmeldung eingereicht wurden
und die nicht in dieser Patentschrift enthalten sind.

(51) Int. Cl.5: **A23F 3/40**, A23F 3/14,
A23F 3/34

(54) **Verfahren zur Herstellung einer Mischung für ein Teegetränk mit Fruchtgeschmack, so hergestellte Teemischung und ihre Verwendung.**

(30) Priorität: **13.06.86 DE 3619912**

(43) Veröffentlichungstag der Anmeldung:
**23.12.87 Patentblatt 87/52**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**EP-A- 0 099 557
EP-A- 0 109 698
DE-A- 3 232 642
FR-A- 2 328 411
GB-A- 2 095 968**

**Voigt: Lehrbuch der pharmazeutischen
Technologie, 1982**

**Suche, Fuchs, Speiser: Pharmazeutische
Technologie**

(73) Patentinhaber: **Salus-Haus Dr. Med. Otto Greither Inhaber Otto Greither
Postfach 1180
W-8206 Bruckmühl(DE)**

(72) Erfinder: **Brunner, Peter, Dr.
Bahnhofstrasse 24
W-8206 Bruckmühl(DE)**

(74) Vertreter: **Liska, Horst, Dr.-Ing. et al
Patentanwälte H. Weickmann, Dr. K. Fincke,
F.A. Weickmann, B. Huber, Dr. H. Liska, Dr. J.
Prechtel Kopernikusstrasse 9 Postfach 86 08
20
W-8000 München 86(DE)**

## Beschreibung

Die Erfindung betrifft ein Verfahren zur Herstellung einer Mischung für ein Teegetränk mit Fruchtgeschmack, sowie eine auf diese Weise hergestellte Teemischung und ihre Verwendung.

Teemischungen mit Fruchtgeschmack sind zur Herstellung eines Aufgußgetränkes mit aromatischem Geschmack sehr beliebt. Dazu gibt es einerseits Schwarztee-Mischungen, die Fruchtaroma enthalten und andererseits Kräutertees, die aus Teilen verschiedener Pflanzen hergestellt werden. Zur schnellen Bereitung von Tees mit Fruchtgeschmack sind außerdem Instant-Teegetränke auf dem Markt. Diese Instant-Teegetränke bestehen aus getrockneten Extrakten einzelner Kräuter oder Früchte oder Mischungen verschiedener Kräuter oder Früchte und bekannten Trägerstoffen wie Zucker, Milchzucker, Maltodextrinen etc. Die Instant-Tees können außerdem ätherische Öle und Aromastoffe zur Aromatisierung enthalten.

Nachteil der bekannten aromatisierten Teemischungen ist es, daß einerseits die Palette an Geschmacksrichtungen begrenzt ist und andererseits bei Zusatz von Aromastoffen das volle Aroma der betreffenden Frucht nicht hergestellt werden kann, da die Aromastoffe meist nur aus einem oder einigen wenigen Hauptbestandteilen eines komplex zusammengesetzten Fruchtaromas bestehen.

Es wurde daher auch schon erwogen, Teemischungen herzustellen, denen zur Aromatisierung getrocknete Fruchtextrakte zugesetzt werden. Diese als Fruchtpulver aus Fruchtsaft oder Fruchtsaftkonzentrat durch Trocknung erhaltenen Produkte haben jedoch den Nachteil, daß sie durch den hohen Gehalt von Fructose sehr hygroskopisch sind und in kurzer Zeit verklumpen. Diese Verklumpung beeinträchtigt sowohl die Abfüllung als auch die spätere Verwendung einer Mischung aus derartigem Fruchtpulver mit getrockneten Pflanzenteilen, insbesondere, wenn Feinschnitte verwendet werden, deren Teilchengrößen ca. 0,5 bis 2,0 mm betragen.

Es war daher Aufgabe der vorliegenden Erfindung, ein Verfahren zu schaffen, das es ermöglicht, zur Aromatisierung von Mischungen für ein Teegetränk mit Fruchtgeschmack fructosehaltige Fruchtextrakte zu verwenden, ohne daß die bekannten Nachteile des Verklumpens auftreten.

Diese Aufgabe wird gelöst durch ein Verfahren zur Herstellung einer Mischung für ein Teegetränk mit Fruchtgeschmack, das dadurch gekennzeichnet ist, daß man ein fructosehaltiges Fruchtkonzentrat mit 2 bis 35 Gew.-%, bezogen auf die Trockenmasse, eines für die Herstellung von Tee geeigneten Pulvers aus getrockneten Pflanzenteilen versetzt, das Fruchtkonzentrat trocknet und das getrocknete Fruchtkonzentrat anschließend mit für die Herstellung von Tee geeigneten getrockneten Pflanzenteilen vermischt.

Mit dem erfindungsgemäßen Verfahren ist es möglich, mit getrocknetem Fruchtextrakt versetzte Teemischungen herzustellen, ohne daß auch bei längerer Lagerung Verklumpungen auftreten. Auf diese Weise können Teemischungen hergestellt werden mit einer Vielfalt von fruchtigen Geschmacksnuancen.

Zur Herstellung der Mischung wird zuerst ein Fruchtkonzentrat mit einem Pulver aus getrockneten Pflanzenteilen vermischt. Als Fruchtkonzentrat wird ein eingedickter Fruchtsaft oder Fruchtextrakt verwendet, der neben den eigentlichen Fruchtbestandteilen noch Trägerstoffe und übliche Zusatzstoffe, sowie gegebenenfalls Aromastoffe enthalten kann. Die mit dem Pulver versetzte Lösung wird dann in an sich bekannter Weise getrocknet. Die Trocknung erfolgt üblicherweise unter produktschonenden Bedingungen, d.h. unter Bedingungen, die das Aroma des Fruchtsaftes nicht beeinträchtigen und insbesondere keine die Qualität beeinträchtigenden Reaktionen wie die Maillardreaktion zulassen. Die Trocknung kann beispielsweise in einem Vakuumbandtrockner oder in anderen geeigneten Trocknern erfolgen. Das erhaltene getrocknete Konzentrat kann in Form von Pulver oder als Granulat verwendet werden.

Bevorzugt wird das erfindungsgemäß stabilisierte Fruchtpulver in granulierter Form eingesetzt. Der in diesen Granulaten enthaltene Pflanzenstaub wirkt, wenn das Granulat mit Wasser in Kontakt kommt, als Sprengmittel und fördert die rasche Auflösung, so daß die Geschmacks-und Aromastoffe aus den getrockneten Pflanzenteilen der Teemischung und die Bestandteile des Fruchtpulvers in etwa gleichzeitig in Lösung gehen.

Der so getrocknete Fruchtextrakt wird anschließend mit getrockneten Pflanzenteilen vermischt.

Der Anteil an erfindungsgemäß stabilisiertem Fruchtpulver in der Teemischung liegt bevorzugt im Bereich von 5 bis 20 Gew.%, bezogen auf Trockenmasse.

Als Pulver zur Stabilisierung des Fruchtkonzentrates werden pulverförmige getrocknete Pflanzenteile verwendet. Dazu wird insbesondere Drogenstaub verwendet. Unter Drogen werden allgemein für medizinische Zwecke verwendbare getrocknete Pflanzen verstanden. Geeignet sind beispielsweise Hagebuttenstaub, Brombeerblätterstaub, koffeinfreier oder koffeinhaltiger Schwarzteestaub und dergleichen. Die als Pulver eingesetzten getrockneten Pflanzenteile sind leicht erhältlich, da sie oft beim Zerkleinern der getrockneten Rohstoffe entstehen und manchmal sogar als Abfall verworfen werden.

Bevorzugt wird zur Stabilisierung des Teekonzentrats ein Pulver derjenigen getrockneten Pflanzenteile verwendet, die dann zur Herstellung der Teemischung dienen. Es werden daher besonders bevorzugt Drogenstäube verwendet, die ihrerseits wiederum von Teearten und Kräuterteearten herstammen.

Besonders bevorzugt wird Hibiscusstaub verwendet, da dieser gleichzeitig zur Farbgebung dient. Auf diese Weise kann der Zusatz anderer färbender Mittel unterbleiben.

Durch Zugabe vitaminhaltiger Fruchtsaftpulver besteht auch die Möglichkeit, Vitamine wie insbesondere Vitamin C auf natürliche Weise in die Teemischung einzubringen. Besonders bevorzugt wird dazu Acerolafruchtpulver verwendet, das einen sehr hohen Vitamin C-Gehalt aufweist, so daß es möglich ist, mit einem Aufgußgetränk aus einem einzigen Teebeutel ungefähr 1/3 des Tagesbedarfs an Vitamin C eines Erwachsenen zu decken.

Der Anteil der zur Stabilisierung des Fruchtsaftpulvers notwendigen Menge an Pulver aus getrockneten Pflanzenteilen hängt von dem jeweils verwendeten Staub ab. Bevorzugt werden die pulverförmigen getrockneten Pflanzenteile in einer Menge von 15 bis 25 Gew.-%, bezogen auf Trockenmasse, eingesetzt.

Falls die Mischung aus getrockneten Pflanzenteilen und dem mit Pulver aus getrockneten Pflanzenteilen stabilisierten Fruchtkonzentraten noch kein befriedigendes Aroma entfaltet, können dem Fruchtpulver zur Abrundung des Aromas noch Aromastoffe aufgesprüht werden. Selbst durch das Aufsprühen flüssiger Aromastoffe findet eine Verklumpung des Fruchtsaftpulvers nicht statt.

Besonders geeignet ist das erfindungsgemäß stabilisierte Fruchtsaftkonzentrat zur Aromatisierung von schwarzem Tee. Insbesondere entkoffeinierter schwarzer Tee, der durch das Entkoffeinierungsverfahren Aroma verloren hat, kann auf diese Weise geschmacklich aufgewertet werden. Auch hier können zur geschmacklichen Abrundung noch ätherische Öle und/oder Aromastoffe zugesetzt werden.

Gegenstand der Erfindung sind auch Teemischungen, die aus erfindungsgemäß stabilisiertem Fruchtpulver und getrockneten Pflanzenteilen bestehen. Bevorzugt werden diese Mischungen in Aufgußbeutel abgefüllt und als Teebeutel verwendet.

Mit dem erfindungsgemäßen Verfahren können Mischungen für Teegetränke mit Fruchtgeschmack hergestellt werden, die problemlos abgefüllt und weiterverarbeitet werden können, da es zu keinen Verklumpungen kommt. Es können auf diese Weise sehr schmackhafte und aromatische Aufgußgetränke aus den erfindungsgemäßen Mischungen erhalten werden.

Aus der DE-A 32 32 642 ist ein Verfahren zur Herstellung von Aromagranulaten für Schwarzteezubereitungen bekannt, bei dem Schwarzteepulver mit Milchzucker und Puderzucker sowie Aromamittel versetzt und dann mit einer wäßrigen Gelatinelösung granuliert wird. Hieraus läßt sich nichts herleiten für die Lösung des der Erfindung zugrundeliegenden Problems.

Aus der EP-A-0 099 557 wird ein Instantgetränk für Säuglinge und kleinkinder offenbart, bei dem der Zucker als Träger durch ein lösliches Protein ersetzt wird.

Aus der GB-A2 2 095 968 ist ein Verfahren zur Herstellung einer Aromazusammensetzung für Tee bekannt, bei dem eine Ölin-Wasser-Emulsion aus einem öligen Aromamittel in einem wäßrigen Tee-Extrakt hergestellt und die Mischung sprühgetrocknet wird. In der FR-A 23 27 411 wird die Herstellung einer granulierten Zusammensetzung zur Herstellung eines Getränks offenbart, bei welchem die Granulaten aus Aromakörpern bestehen, die mit pulverförmigen Aromastoffen beschichtet sind. Aus der EP-A 0 109 698 wird schließlich ein Verfahren zum Aromatisieren von trockenem pflanzlichen Material mit einem mikroverkapselten Aroma beschrieben, bei welchem die Mikrokapseln mit einer wäßrigen Klebstofflösung auf das Pflanzenmaterial wie Tee oder Tabak aufgebracht und getrocknet werden. In all diesen Fällen wird das der Erfindung zugrundeliegende Problem weder gestellt noch gelöst.

Die Erfindung wird durch die Beispiele erläutert:

**Beispiel 1:**

Fruchtkonzentrat von Acerola wurde mit 50 Gew.-% Maltodextrin versetzt. Weiterhin wurden 50 Gew.-% Hibiscuspulver zugefügt und diese Mischung auf einem Vakuumbandtrockner getrocknet. Dieses Fruchtpulver wurde einer Mischung aus Hagebuttenschalen und Hibiscusfruchtkelchen zugesetzt. Aus dieser Mischung wurde ein Aufgußgetränk bereitet, das einen sehr angenehmen und runden Geschmack hatte.

**Beispiel 2:**

Maracuja-Fruchtsaftkonzentrat und Orangen-Fruchtsaftkonzentrat wurden im Verhältnis 1:1 gemischt. Der Mischung wurde pulverförmiger schwarzer Tee zugesetzt und diese Mischung dann am Vakuumbandtrockner getrocknet. Das erhaltene Fruchtpulver wurde gemischt mit schwarzem Tee und in Teebeutel in üblicher Menge abgefüllt. Beim Aufgießen erhielt man ein aromatisches Teegetränk mit Fruchtgeschmack.

**Patentansprüche**

1. Verfahren zur Herstellung einer Mischung für ein Teegetränk mit Fruchtgeschmack,

**dadurch gekennzeichnet,**
daß man ein fructosehaltiges Fruchtkonzentrat mit 2 bis 35 Gew.-%, bezogen auf die Trockenmasse, eines für die Herstellung von Tee geeigneten Pulvers aus getrockneten Pflanzenteilen versetzt, das Fruchtkonzentrat trocknet und das getrocknete Fruchtkonzentrat anschließend mit für die Herstellung von Tee geeigneten getrockneten Pflanzenteilen vermischt.

2. Verfahren nach Anspruch 1, **dadurch gekennzeichnet,** daß man als Fruchtkonzentrat einen Fruchtextrakt, der Trägerstoffe und Aromastoffe enthält, verwendet.

3. Verfahren nach Anspruch 1 oder 2, **dadurch gekennzeichnet,** daß man als Pulver Drogenstaub verwendet.

4. Verfahren nach einem der vorhergehenden Ansprüche,
**dadurch gekennzeichnet,**
daß man dem Fruchtkonzentrat 15 bis 25 Gew.-% Pulver, bezogen auf die Trockenmasse, zusetzt.

5. Verfahren nach einem der vorhergehenden Ansprüche,
**dadurch gekennzeichnet,**
daß das Pulver und die getrockneten Pflanzenteile derselben Pflanze entstammen.

6. Verfahren nach einem der vorhergehenden Ansprüche, **dadurch gekennzeichnet,** daß als getrocknete Pflanzenteile Hagebuttenschalen, Hibiscusfruchtkelche, Pfefferminzblätter, Lindenblüten, Orangenschalen, Zimtrinde, Vanilleschoten oder Teeblätter verwendet werden.

7. Verfahren nach einem der vorhergehenden Ansprüche, **dadurch gekennzeichnet,** daß man 5 bis 20 Gew.-% des getrockneten Fruchtextraktes mit 80 bis 95 Gew.-% getrockneten Pflanzenteilen mischt.

8. Verfahren nach einem der vorhergehenden Ansprüche, **dadurch gekennzeichnet,** daß man der Mischung zusätzlich ätherische Öle und/oder Aromastoffe zusetzt.

9. Verwendung der nach dem Verfahren nach Anspruch 1 bis 8 hergestellten Mischung zur Herstellung von Teeaufgußbeuteln.

**Claims**

1. Process for the preparation of a mixture for a tea drink with fruit flavour, characterised in that one mixes a fructose-containing fruit concentrate with 2 to 35 wt.%, referred to the dry weight, of a powder of plant parts suitable for the preparation of tea, dries the fruit concentrate and subsequently mixes the dried fruit concentrate with dried plant parts suitable for the preparation of tea.

2. Process according to claim 1, characterised in that, as fruit concentrate, one uses a fruit extract which contains carrier materials and aroma materials.

3. Process according to claim 1 or 2, characterised in that one uses drug dust as powder.

4. Process according to one of the preceding claims, characterised in that one adds to the fruit concentrate 15 to 25 wt.% of powder, referred to the dry weight.

5. Process according to one of the preceding claims, characterised in that the powder and the dried plant parts originate from the same plant.

6. Process according to one of the preceding claims, characterised in that, as dried plant parts, there are used hip skins, hibiscus fruit calyx, peppermint leaves, lime flowers, orange peel, cinnamon bark, vanilla pods or tea leaves.

7. Process according to one of the preceding claims, characterised in that one mixes 5 to 20 wt.% of the dried fruit extract with 80 to 95 wt.% of dried plant parts.

8. Process according to one of the preceding claims, characterised in that one adds additional ethereal oils and/or aroma materials to the mixture.

9. Use of the mixture prepared according to the process according to claims 1 to 8 for the production of tea infusion bags.

**Revendications**

1. Procédé de préparation d'un mélange pour une boisson infusée à goût de fruit, caractérisé en ce qu'on ajoute à un concentré de fruit contenant du fructose 2 à 35% en poids, par rapport à la masse sèche, d'une poudre de parties de plantes séchées appropriée à la préparation d'infusions, on sèche le concentré de fruit et on mélange ensuite le concentré de fruit séché avec des parties de plantes séchées appropriées à la préparation d'infusions.

2. Procédé selon la revendication 1, caractérisé en ce qu'on utilise, comme concentré de fruit, un extrait de fruit contenant des supports et des substances aromatiques.

3. Procédé selon la revendication 1 ou 2, caractérisé en ce qu'on utilise comme poudre une poudre de drogue.

4. Procédé selon l'une des revendications précédentes, caractérisé en ce qu'on ajoute au concentré de fruit 15 à 25% en poids de poudre par rapport à la masse sèche.

5. Procédé selon l'une des revendications précédentes, caractérisé en ce que la poudre et les parties de plantes séchées proviennent de la même plante.

6. Procédé selon l'une des revendications précédentes caractérisé en ce qu'on utilise, comme parties de plantes séchées, des écorces de cynorrhodon, des calices de fruit d'hibiscus, des feuilles de menthe, des fleurs de tilleul, des écorces d'oranges, des écorces de cannelle, des gousses de vanille ou des feuilles de thé.

7. Procédé selon l'une des revendications précédentes, caractérisé en ce qu on mélange 5 à 20% en poids de l'extrait de fruit séché avec 80 à 95% en poids de parties de plantes séchées.

8. Procédé selon l'une des revendications précédentes, caractérisé en ce qu on ajoute en plus au mélange des huiles essentielles et/ou des substances aromatiques.

9. Utilisation du mélange obtenu par le procédé selon la revendication 1 à 8 pour la préparation de sachets d'infusion.